# EUROPEAN PATENT APPLICATION

(11) **EP 3 675 268 A1**
(43) Date of publication of application: **01.07.2020**
(21) Application number: 18849152.6
(22) Date of filing: 13.08.2018
(51) Int. Cl.: H01M 10/0567, H01M 4/505, H01M 4/525, H01M 4/58, H01M 10/052

(54) **LITHIUM SECONDARY BATTERY AND NONAQUEOUS ELECTROLYTE SOLUTION**

(30) Priority: 24.08.2017 JP 2017161286
(71) Applicant: Mitsui Chemicals, Inc., Minato-ku Tokyo 105-7122 (JP)
(72) Inventor: FUJIYAMA, Satoko, Sodegaura-shi Chiba 299-0265 (JP); SUGAWARA, Kei, Sodegaura-shi Chiba 299-0265 (JP)
(74) Representative: J A Kemp LLP
(86) International application number: PCT/JP2018/030239
(87) International publication number: WO 2019/039345

(57) **Abstract**

Provided is a lithium secondary battery, including: a positive electrode containing a positive electrode active material that contains a lithium transition metal compound X, which is at least one selected from the group consisting of a lithium transition metal composite oxide and a lithium transition metal phosphate, a ratio of Mn in transition metal elements contained in the lithium transition metal compound X being from 0 mol% to less than 50 mol%; a negative electrode; and a nonaqueous electrolyte solution containing a boron compound represented by the following Formula (1): in Formula (1), n represents an integer from 1 to 5, M⁺ represents an Li⁺ ion or an H⁺ ion, and when n is an integer from 2 to 5, more than one M⁺ may be the same as or different from each other.

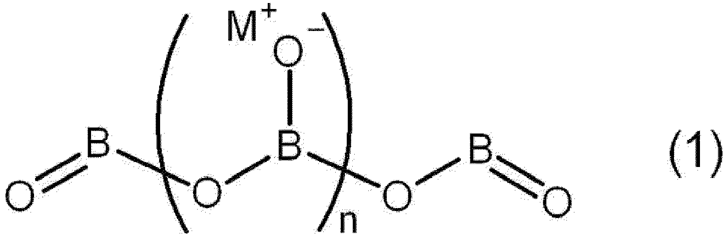

## Description

### Technical Field

The present disclosure relates to a lithium secondary battery and a nonaqueous electrolyte solution.

### Background Art

In recent years, a lithium secondary battery has been widely used as a power source for electronic devices such as mobile phones and laptop computers, electric vehicles, and a power storage. In particular, recently, there has been a rapid increase in demand for a battery having high capacity, high output, and high energy density, which can be mounted on hybrid vehicles and electric vehicles.

The lithium secondary battery includes, for example, a positive electrode and a negative electrode containing a material capable of absorbing/desorbing lithium, and a nonaqueous electrolyte solution for a battery containing a lithium salt and a nonaqueous solvent.

Conventionally, various studies have been made on a lithium secondary battery containing nonaqueous electrolyte solution (also referred to as a nonaqueous electrolyte solution secondary battery and the like).

For example, Patent Document 1 discloses a nonaqueous electrolyte solution battery using lithium or a lithium alloy as a negative electrode active material and manganese dioxide as a positive electrode active material, which can suppress an increase in internal resistance occurring when a battery in which most of a discharge capacity is discharged is left for a long time and used again or when a battery is used for a long time at a low current of about several µA as a power source for memory backup, and can obtain good battery performance, in which the nonaqueous electrolyte solution battery includes a negative electrode containing lithium or a lithium alloy, a positive electrode mainly composed of manganese dioxide, and a nonaqueous electrolyte solution, and the nonaqueous electrolyte solution contains lithium boron oxide in a ratio of from 0.01 mol/l to 0.5 mol/l.

Patent Document 2 discloses a nonaqueous electrolyte secondary battery which can improve a cycle characteristic by protecting a positive electrode active material from the action of hydrofluoric acid, in which the nonaqueous electrolyte secondary battery includes a nonaqueous electrolyte solution containing LiPF₆ as an electrolyte salt in a nonaqueous solvent, and the nonaqueous electrolyte solution contains lithium borate. Patent Document 2 discloses an example in which lithium manganate is used as the positive electrode active material.

Patent Document 3 discloses a nonaqueous electrolyte solution secondary battery which can maintain a high battery capacity even when used or stored in a high-temperature environment such as inside a car in summer, in which a lithium manganese composite oxide is used as a positive electrode active material, lithium, a lithium alloy, or a carbon material which reversibly absorbs and desorbs lithium is used as a negative electrode active material, and a nonaqueous electrolyte solution includes from 0.01 mol% to 2 mol% of lithium boron oxide.

Patent Document 1: Japanese Patent Application Laid-Open (JP-A) No. 2000-48828
Patent Document 2: Japanese Patent Application Laid-Open (JP-A) No. 2005-71617
Patent Document 3: Japanese Patent (JP-B) No. 4366724

### SUMMARY OF INVENTION

### Technical Problem

Patent Documents 1 to 3 described above all disclose a battery having a combination of a positive electrode active material containing a transition metal compound in which a main constituent of transition metal elements is Mn (manganese), and a nonaqueous electrolyte solution containing lithium tetraborate (Li₂B₄O₇).

However, according to studies by the present inventors, it was found that a battery having a combination of a positive electrode active material containing a transition metal compound in which a main constituent of transition metal elements is Mn and a nonaqueous electrolyte solution containing lithium tetraborate (Li₂B₄O₇), may have increased battery resistance after storage.

An object of the present disclosure is to provide a lithium secondary battery having decreased battery resistance after storage, and a nonaqueous electrolyte solution which can decrease battery resistance after storage of the lithium secondary battery.

### Solution to Problem

As the solutions to the above problems, the following aspects are included.
<1> A lithium secondary battery including:
   a positive electrode containing a positive electrode active material that contains a lithium transition metal compound X, which is at least one selected from the group consisting of a lithium transition metal composite oxide and a lithium transition metal phosphate, a ratio of Mn in transition metal elements contained in the lithium transition metal compound X being from 0 mol% to less than 50 mol%;
   a negative electrode; and
   a nonaqueous electrolyte solution containing a boron compound represented by the following Formula (1).

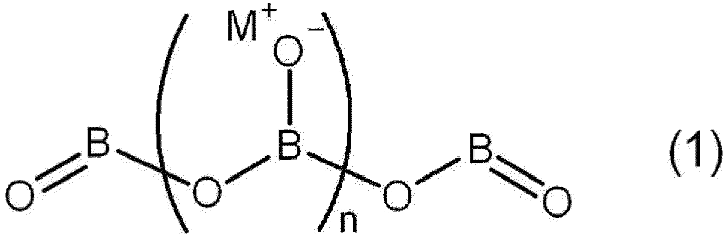

   In Formula (1), n represents an integer from 1 to 5, M⁺ represents an Li⁺ ion or an H⁺ ion, and when n is an integer from 2 to 5, more than one M⁺ may be the same as or different from each other.
<2> The lithium secondary battery according to <1>, wherein the M⁺ in Formula (1) is an Li⁺ ion.
<3> The lithium secondary battery according to <1> or <2>, wherein a content of the boron compound represented by Formula (1) with respect to a total amount of the nonaqueous electrolyte solution is from 0.001% by mass to 10% by mass.
<4> The lithium secondary battery according to any one of <1> to <3>, wherein the lithium transition metal compound X contains at least one selected from the group consisting of Co, Ni, and Fe, and a total ratio of Co, Ni, and Fe relative to the transition metal elements contained in the lithium transition metal compound X is 50 mol% or more.
<5> The lithium secondary battery according to any one of <1> to <4>, wherein the lithium transition metal composite oxide includes at least one of a compound represented by the following Formula (P1) or a compound represented by the following Formula (P2), and
   the lithium transition metal phosphate includes a compound represented by the following Formula (P3).

   LiM¹_{X}M²_{(1-X)}O₂ (P1)

   LiNiₓMn_{y}Co_{z}O₂ (P2)

   LiM³PO₄ (P3)

   In Formula (P1), X represents from 0 to 1.00, each of M¹ and M² independently represents Co, Ni, or Fe, and each of a part of M¹ and a part of M² may be independently replaced by at least one selected from the group consisting of Al, Mg, and Ti,
   in Formula (P2), x represents from 0 to 1.00, y represents from 0 to less than 0.50, z represents from 0 to 1.00, and a sum of x, y, and z is from 0.99 to 1.00, and
   in Formula (P3), M³ represents Co, Ni, or Fe, and a part of M³ may be replaced by at least one selected from the group consisting of Al, Mg, and Ti.
<6> The lithium secondary battery according to any one of <1> to <5>, wherein the lithium transition metal compound X includes at least one selected from the group consisting of LiCoO₂, LiNiO₂, LiFeO₂, a compound represented by the following Formula (P2), LiCoPO₄, LiNiPO₄, and LiFePO₄:

   LiNiₓMn_{y}Co_{z}O₂ (P2)

   wherein, in Formula (P2), x represents from 0 to 1.00, y represents from 0 to less than 0.50, z represents from 0 to 1.00, and a sum of x, y, and z is from 0.99 to 1.00.
<7> The lithium secondary battery according to any one of <1> to <6>, wherein a ratio of Mn in the lithium transition metal compound X is more than 0 mol% and less than 50 mol%.
<8> The lithium secondary battery according to <6>, wherein the lithium transition metal compound X includes the compound represented by Formula (P2), and y in Formula (P2) is more than 0 and less than 0.50.
<9> A lithium secondary battery obtained by charging and discharging the lithium secondary battery according to any one of <1> to <8>.
<10> A nonaqueous electrolyte solution including a boron compound represented by the following Formula (1), the nonaqueous electrolyte solution being used in a lithium secondary battery including a positive electrode active material that contains a lithium transition metal compound X, which is at least one selected from the group consisting of lithium transition metal composite oxides and lithium transition metal phosphates, a ratio of Mn in transition metal elements contained in the lithium transition metal compound X being from 0 mol% to less than 50 mol%. 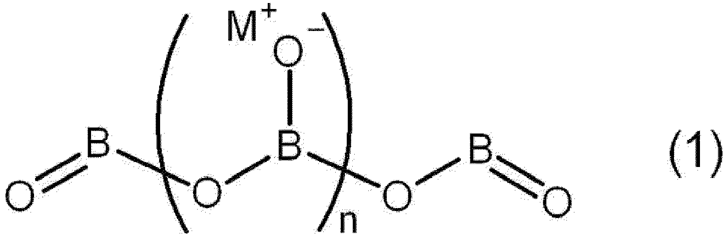
   In the Formula (1), n represents an integer from 1 to 5, M⁺ represents an Li⁺ ion or an H⁺ ion, and when n is an integer from 2 to 5, more than one M⁺ may be the same as or different from each other.
<11> The nonaqueous electrolyte solution according to <10>, wherein the lithium transition metal compound X includes at least one selected from the group consisting of LiCoO₂, LiNiO₂, LiFeO₂, a compound represented by the following Formula (P2), LiCoPO₄, LiNiPO₄, and LiFePO₄:

   LiNiₓMn_{y}Co_{z}O₂ (P2)

   wherein, in Formula (P2), x represents from 0 to 1.00, y represents from 0 to less than 0.50, z represents from 0 to 1.00, and a sum of x, y, and z is from 0.99 to 1.00.
<12> The nonaqueous electrolyte solution according to <10> or <11>, wherein the ratio of Mn in the lithium transition metal compound X is more than 0 mol% and less than 50 mol%.
<13> The nonaqueous electrolyte solution according to <11>, wherein the lithium transition metal compound X includes the compound represented by Formula (P2) and y in Formula (P2) is more than 0 and less than 0.50.

### Advantageous Effects of Invention

According to the disclosure, there are provided a lithium secondary battery having decreased battery resistance after storage, and a nonaqueous electrolyte solution which can decrease battery resistance after storage of the lithium secondary battery.

### BRIEF DESCRIPTION OF DRAWINGS

Fig. 1 is a schematic perspective view showing an example of a laminate type battery as an example of a lithium secondary battery of the disclosure.
Fig. 2 is a schematic cross-sectional view of a stacked electrode body accommodated in the laminate type battery shown in Fig. 1 in the thickness direction.
Fig. 3 is a schematic cross-sectional view showing an example of a coin type battery, which is another example of the lithium secondary battery of the disclosure.

### DESCRIPTION OF EMBODIMENTS

In the present specification, a numerical range expressed using "to" means a range including numerical values described before and after "to" as a lower limit value and an upper limit value.

In the present specification, the amount of each component in the composition means, unless otherwise particularly stated, the total amount of the plurality of substances present in the composition, when there are the plurality of substances corresponding to each component in the composition.

The nonaqueous electrolyte solution of the disclosure is used in a lithium secondary battery which includes a positive electrode active material containing a lithium transition metal compound X, which is at least one selected from the group consisting of a lithium transition metal composite oxide and a lithium transition metal phosphate, a ratio of Mn in transition metal elements contained in the lithium transition metal compound X being from 0 mol% to less than 50 mol%, and the nonaqueous electrolyte solution includes a boron compound represented by the following Formula (1).

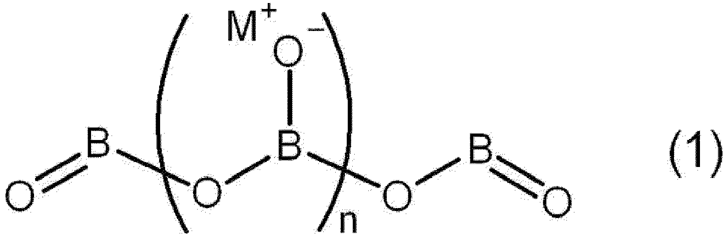

In Formula (1), n represents an integer from 1 to 5, M⁺ represents an Li⁺ ion or an H⁺ ion, and when n is an integer from 2 to 5, more than one M⁺ may be the same as or different from each other.

The lithium secondary battery of the disclosure includes: a positive electrode containing a positive electrode active material that contains a lithium transition metal compound X, which is at least one selected from the group consisting of a lithium transition metal composite oxide and a lithium transition metal phosphate, a ratio of Mn in the transition metal elements contained in the lithium transition metal compound X being from 0 mol% to less than 50 mol%, a negative electrode, and a nonaqueous electrolyte solution containing a boron compound represented by Formula (1).

As described above, Patent Documents 1 to 3 all disclose a battery having a combination of a positive electrode active material containing a transition metal compound in which a main constituent of transition metal elements is Mn (manganese) and a nonaqueous electrolyte solution containing lithium tetraborate (Li₂B₄O₇).

In paragraphs 0018 to 0023 of Patent Document 1, paragraph 0005 of Patent Document 2, and paragraph 0012 of Patent Document 3, it is disclosed that lithium tetraborate suppresses elution of manganese ions from the positive electrode or precipitation of eluted manganese ions at the negative electrode, and as a result, the desired effect is achieved.

However, according to studies by the present inventors, it was found that a battery having a combination of a positive electrode active material containing a transition metal compound in which a main constituent of transition metal elements is Mn and a nonaqueous electrolyte solution containing lithium tetraborate (Li₂B₄O₇) (for example, batteries described in Patent Documents 1 to 3), may have increased battery resistance after storage (see, for example, Comparative Example 3 described later).

The reason for this is not clear, but it is presumed that though elution of manganese ions is suppressed before storage, manganese ions are eluted during storage, and as a result, battery resistance after storage may be increased.

Regarding the battery resistance after storage, the lithium secondary battery of the disclosure has decreased battery resistance after storage, as compared with a battery having a combination of a positive electrode active material containing Mn as a main constituent of transition metal elements and a nonaqueous electrolyte solution containing lithium tetraborate (for example, batteries described in Patent Documents 1 to 3).

The reason for this effect is not clear, but is presumed as follows.

That is, it is considered that in the lithium secondary battery of the disclosure, a lithium transition metal compound X having a ratio of Mn in the transition metal element from 0 mol% to less than 50 mol% is used, instead of the positive electrode active material containing a transition metal compound in which the main constituent of the transition metal elements is Mn, thereby eliminating or decreasing elution of Mn from the positive electrode during storage. Therefore, it is considered that an increase in battery resistance during storage due to the elution of Mn during storage is suppressed, and as a result, the battery resistance after storage is decreased.

Since the boron compound represented by Formula (1) (for example, lithium tetraborate) has a high reductive decomposition potential by cyclic voltammetry (CV), the boron compound is considered to be rapidly decomposed on a negative electrode to form a coated film having low resistance and excellent durability on the negative electrode. The coated film having low resistance and excellent durability is considered to contribute to a decrease in battery resistance after storage.

In the lithium secondary battery of the disclosure, it is considered that the lithium transition metal compound X having the ratio of Mn in the transition metal element from 0 mol% to less than 50 mol% is used, instead of the positive electrode active material containing the transition metal compound in which the main constituent of transition metal element is Mn, whereby the above function of the boron compound represented by Formula (1) (that is, the function of forming a coated film having low resistance and excellent durability) is easily exhibited.

As described above, in the lithium secondary battery of the disclosure, it is considered that the effect of decreasing the battery resistance after storage is exhibited by a mechanism completely different from the effect exhibition mechanism described in Patent Documents 1 to 3 (that is, suppression of the elution of manganese ions from a positive electrode or the precipitation of eluted manganese ions in a negative electrode).

As described above, the lithium secondary battery of the disclosure has decreased battery resistance after storage.

The lithium secondary battery of the disclosure has, in particular, effectively decreased battery resistance after storage, measured under a low temperature condition (for example, a condition from -30°C to 0°C, the same shall apply hereinafter).

The lithium secondary battery of the disclosure has decreased battery resistance before storage as well as the decreased battery resistance after storage. The reason why the battery resistance before storage is decreased may be the same as the reason why the battery resistance after storage is decreased.

Hereinafter, the nonaqueous electrolyte solution of the disclosure will be described, and then each element (positive electrode, negative electrode, and the like) of the lithium secondary battery of the disclosure will be described.

### <Nonaqueous Electrolyte Solution>

The nonaqueous electrolyte solution of the disclosure contains a boron compound represented by the following Formula (1).

### (Boron compound represented by Formula (1))

The boron compound represented by Formula (1) is as follows.

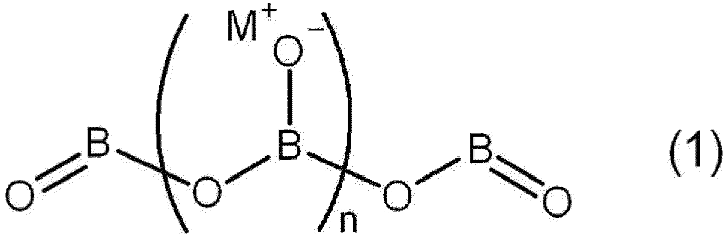

In Formula (1), n represents an integer from 1 to 5, M⁺ represents an Li⁺ ion or an H⁺ ion, and when n is an integer from 2 to 5, more than one M⁺ may be the same as or different from each other.

In Formula (1), n is preferably an integer from 1 to 3, and particularly preferably 2.

In Formula (1), M⁺ is particularly preferably an Li⁺ ion.

Examples of the boron compound represented by Formula (1) includes:
lithium triborate (compound in which n is 1 and M⁺ is an Li⁺ ion),
lithium tetraborate (compound in which n is 2 and two M⁺'s are Li⁺ ions),
lithium pentaborate (compound in which n is 3 and three M⁺'s are Li⁺ ions),
lithium hexaborate (compound in which n is 4 and four M⁺'s are Li⁺ ions), and
lithium heptaborate (compound in which n is 5 and five M⁺'s are Li⁺ ions).

The boron compound represented by Formula (1) contained in the nonaqueous electrolyte solution of the disclosure may be one or two or more kinds.

The content of the boron compound represented by Formula (1) (the total content when there are two or more kinds) with respect to the total amount of the nonaqueous electrolyte solution of the disclosure is preferably from 0.001% by mass to 10% by mass, more preferably from 0.005% by mass % to 5% by mass, still preferably from 0.01% by mass to 1% by mass, and particularly preferably from 0.01% by mass to 0.5% by mass.

The nonaqueous electrolyte solution of the disclosure may contain an additive A which is a boron compound represented by Formula (1), and an additive B which is another additive other than the boron compound represented by Formula (1).

In this case, additive A and additive B may be one or two or more kinds, respectively.

As additive B, a compound having a low reductive decomposition potential by cyclic voltammetry (CV) (that is, a compound decomposed after decomposition of the boron compound represented by Formula (1)) is preferred, as compared with the boron compound represented by Formula (1). This allows the coated film on the negative electrode formed by the boron compound represented by Formula (1) to be reinforced by other additives, and as a result, the effect of decreasing resistance during storage is exhibited more effectively by the boron compound represented by Formula (1).

The additive B is more preferably at least one selected from the group consisting of a carbonate compound having a carbon-carbon unsaturated bond, a sultone compound, a cyclic sulfuric acid ester compound, a phosphoric acid ester compound, an oxalato compound, an aromatic compound substituted with a fluorine atom, an aliphatic compound substituted with a fluorine atom, a dinitrile compound, a sulfonyl compound having a fluorine atom, and a carbonate compound having a fluorine atom.

The additive B is preferably a compound having a molecular weight of 1000 or less, and more preferably a compound having a molecular weight of 500 or less.

### (Carbonate Compound Having Carbon-Carbon Unsaturated Bond)

Examples of the carbonate compound having a carbon-carbon unsaturated bond include chain carbonates such as methyl vinyl carbonate, ethyl vinyl carbonate, divinyl carbonate, methyl propynyl carbonate, ethyl propynyl carbonate, dipropynyl carbonate, methyl phenyl carbonate, ethyl phenyl carbonate, and diphenyl carbonate; cyclic carbonates such as vinylene carbonate, methyl vinylene carbonate, 4,4-dimethyl vinylene carbonate, 4,5-dimethyl vinylene carbonate, vinyl ethylene carbonate, 4,4-divinyl ethylene carbonate, 4,5-divinyl ethylene carbonate, ethynyl ethylene carbonate, 4,4-diethynyl ethylene carbonate, 4,5-diethynyl ethylene carbonate, propynyl ethylene carbonate, 4,4-dipropynyl ethylene carbonate, and 4,5-dipropynyl ethylene carbonate. Among these, methyl phenyl carbonate, ethyl phenyl carbonate, diphenyl carbonate, vinylene carbonate, vinyl ethylene carbonate, 4,4-divinyl ethylene carbonate, and 4,5-divinyl ethylene carbonate are preferred, and vinylene carbonate and vinyl ethylene carbonate are more preferred.

### (Sultone Compound)

Examples of the sultone compound include 1,3-propane sultone, 1,4-butane sultone, 1,3-propene sultone, 1-methyl-1,3-propene sultone, 2-methyl-1,3-propene sultone, and 3-methyl-1,3-propene sultone. Among these, 1,3-propane sultone and 1,3-propene sultone are preferred.

### (Cyclic sulfuric acid ester compound)

Examples of the cyclic sulfuric acid ester compounds include:
catechol sulfate,
1,2-cyclohexyl sulfate,
2,2-dioxo-1,3,2-dioxathiolane,
4-methyl-2,2-dioxo-1,3,2-dioxathiolane,
4-ethyl-2,2-dioxo-1,3,2-dioxathiolane,
4-propyl-2,2-dioxo-1,3,2-dioxathiolane,
4-butyl-2,2-dioxo-1,3,2-dioxathiolane,
4-pentyl-2,2-dioxo-1,3,2-dioxathiolane,
4-hexyl-2,2-dioxo-1,3,2-dioxathiolane,
4-methylsulfonyloxymethyl-2,2-dioxo-1,3,2-dioxathiolane,
4-ethylsulfonyloxymethyl-2,2-dioxo-1,3,2-dioxathiolane,
bis((2,2-dioxo-1,3,2-dioxathiolan-4-yl)methyl)sulfate, and
4,4'-bis(2,2-dioxo-1,3,2-dioxathiolane).

Among these, 4-methylsulfonyloxymethyl-2,2-dioxo-1,3,2-dioxathiolane, 4,4'-bis(2,2-dioxo-1,3,2-dioxathiolane), and 4-propyl-2,2-dioxo-1,3,2-dioxathiolane are preferred.

For the cyclic sulfuric acid ester compound, International Publication No. 2012/053644 may be referred to.

### (Phosphoric acid ester compound)

Examples of the phosphoric acid ester compound include lithium difluorophosphate, lithium monofluorophosphate, tristrimethylsilyl phosphate, dimethyltrimethylsilyl phosphate, methylditrimethylsilyl phosphate, trimethyl phosphate, tristriethylsilyl phosphate, triethyl phosphate, and trioctyl phosphate. Among these, lithium difluorophosphate and tristrimethylsilyl phosphate are preferred.

### (Oxalato compound)

Examples of the oxalato compound include lithium difluorobis(oxalato) phosphate, lithium tetrafluoro(oxalato) phosphate, lithium tris(oxalato) phosphate, lithium difluoro(oxalato) borate, and lithium bis(oxalato) borate.

Among these, lithium difluorobis(oxalato) phosphate and lithium bis(oxalato) borate are preferred.

### (Aromatic compound substituted with fluorine atom)

The aromatic compound substituted with a fluorine atom is preferably benzene substituted with at least one fluorine atom. Here, the benzene substituted with at least one fluorine atom may be substituted with two or more fluorine atoms or may be substituted with a substituent other than a fluorine atom.

Examples of the aromatic compound substituted with a fluorine atom include fluorotoluene (o-, m-, p-form), difluorotoluene, trifluorotoluene, tetrafluorotoluene, pentafluorotoluene, fluorobenzene, difluorobenzene (o-, m-, p-form), 1-fluoro-4-t-butylbenzene, 2-fluorobiphenyl, fluorocyclohexylbenzene (for example, 1-fluoro-2-cyclohexylbenzene, 1-fluoro-3-cyclohexylbenzene, 1-fluoro-4-cyclohexylbenzene), 2,4-difluoroanisole, 2,5-difluoroanisole, 2,6-difluoroanisole, and 3,5-difluoroanisole. Among these, fluorotoluene (o-, m-, p-form) is preferred, and orthofluorotoluene is more preferred.

### (Aliphatic compound substituted with fluorine atom)

The aliphatic compound substituted with a fluorine atom is preferably a fluorinated alkene. Here, the fluorinated alkene refers to an alkene substituted with at least one fluorine atom.

As the fluorinated alkene, a fluorinated alkene having from 3 to 15 carbon atoms is more preferred.

As the fluorinated alkene, ethylene substituted with a fluorinated alkyl group having from 1 to 12 carbon atoms is preferred. Here, the fluorinated alkyl group refers to an alkyl group substituted with at least one fluorine atom.

Examples of the fluorinated alkene include (perfluoromethyl) ethylene, (perfluoroethyl) ethylene, (perfluoropropyl) ethylene, (perfluorobutyl) ethylene, (perfluoropentyl) ethylene, (perfluorohexyl) ethylene, (perfluoroheptyl) ethylene, (perfluorooctyl)ethylene, (perfluorononyl)ethylene, (perfluorodecyl)ethylene, (perfluoroundecyl)ethylene, and (perfluorododecyl)ethylene.

Among these, (perfluorohexyl)ethylene is preferred.

### (Dinitrile compound)

The dinitrile compound is preferably a dinitrile compound having from 2 to 10 carbon atoms.

Examples of the dinitrile compound include malononitrile, succinonitrile, glutaronitrile, adiponitrile, pimelonitrile, suberonitrile, azelanitrile, sebaconitrile, undecandinitrile, dodecandinitrile, methylmalononitrile, ethylmalononitrile, isopropylmalononitrile, tert-butylmalononitrile, methylsuccinonitrile, 2,2-dimethylsuccinonitrile, 2,3-dimethylsuccinonitrile, trimethylsuccinonitrile, tetramethylsuccinonitrile, 3,3'-oxydipropionitrile, 3,3'- thiodipropionitrile, 3,3'-(ethylenedioxy)dipropionitrile, 3,3'-(ethylenedithio)dipropionitrile, 1,2-benzodinitrile, 1,3-benzodinitrile, 1, 4-benzodinitrile, 1,2-dicyanocyclobutane, 1,1-dicyanoethyl acetate, 2,3-dicyanohydroquinone, 4,5-dicyanoimidazole, 2,4-dicyano-3-methylglutamide, 9-dicyanomethylene-2,4,7-trinitrofluorene, and 2,6-dicyanotoluene.

Among these, succinonitrile or adiponitrile is preferred.

### (Sulfonyl compound having fluorine atom)

Examples of the sulfonyl compound having a fluorine atom include a sulfonyl fluoride compound, a lithium fluorinated alkyl sulfonate compound, and a bis(fluorosulfonyl) imide compound.

Examples of the sulfonyl fluoride compound include methanesulfonyl fluoride, ethanesulfonyl fluoride, propanesulfonyl fluoride, 2-propanesulfonyl fluoride, butanesulfonyl fluoride, 2-butanesulfonyl fluoride, hexanesulfonyl fluoride, trifluoromethanesulfonyl fluoride, perfluoroethanesulfonyl fluoride, perfluoropropanesulfonyl fluoride, perfluorobutanesulfonyl fluoride, ethenesulfonyl fluoride, 1-propene-1-sulfonyl fluoride, and 2-propene-1-sulfonyl fluoride, and
methanesulfonyl fluoride, ethanesulfonyl fluoride, propanesulfonyl fluoride, 2-propanesulfonyl fluoride, butanesulfonyl fluoride, 2-butanesulfonyl fluoride, hexanesulfonyl fluoride, trifluoromethanesulfonyl fluoride, perfluoroethanesulfonyl fluoride, perfluoropropanesulfonyl fluoride, or perfluorobutanesulfonyl fluoride is preferred,
methanesulfonyl fluoride, ethanesulfonyl fluoride, propanesulfonyl fluoride, 2-propanesulfonyl fluoride, butanesulfonyl fluoride, 2-butanesulfonyl fluoride, or hexanesulfonyl fluoride is more preferred,
methanesulfonyl fluoride, ethanesulfonyl fluoride, or propanesulfonyl fluoride is still more preferred, and
methanesulfonyl fluoride is particularly preferred.

Examples of the lithium fluorinated alkyl sulfonate compound include lithium trifluoromethane sulfonate and lithium pentafluoroethane sulfonate, and lithium trifluoromethane sulfonate is preferred.

Examples of the bis(fluorosulfonyl) imide compound include lithium bis(fluorosulfonyl) imide.

### (Carbonate compound having fluorine atom)

Examples of the carbonate compound having a fluorine atom include chain carbonates such as methyl trifluoromethyl carbonate, ethyl trifluoromethyl carbonate, bis(trifluoromethyl) carbonate, methyl(2,2,2-trifluoroethyl) carbonate, ethyl(2,2,2-trifluoroethyl) carbonate, bis(2,2,2-trifluoroethyl) carbonate; cyclic carbonates such as 4-fluoroethylene carbonate, 4,4-difluoroethylene carbonate, 4,5-difluoroethylene carbonate, and 4-trifluoromethylethylene carbonate. Among these, 4-fluoroethylene carbonate, 4,4-difluoroethylene carbonate, and 4,5-difluoroethylene carbonate are preferred.

When the nonaqueous electrolyte solution of the disclosure contains an additive B, additive B contained may be only one or two or more kinds.

When the nonaqueous electrolyte solution of the disclosure contains an additive B, the content thereof (the total content when there are two or more kinds) is not particularly limited, but is in a range of from 0.001% by mass to 10% by mass, more preferably in a range of from 0.05% by mass to 5% by mass, still more preferably in a range of from 0.1% by mass to 4% by mass, further preferably in a range of from 0.1% by mass to 2% by mass, and particularly preferably in a range of from 0.1% by mass to 1% by mass, with respect to the total amount of the nonaqueous electrolyte solution.

When the nonaqueous electrolyte solution of the disclosure contains the additive B, the preferred range of the content of the additive A composed of the boron compound represented by Formula (1) is the same as the preferred range of the content of the boron compound represented by Formula (1) with respect to the total amount of the nonaqueous electrolyte solution of the disclosure, described above.

Next, other components of the nonaqueous electrolyte solution will be described. The nonaqueous electrolyte solution generally contains an electrolyte and a nonaqueous solvent.

### (Nonaqueous solvent)

A nonaqueous electrolyte solution generally contains a nonaqueous solvent.

As the nonaqueous solvent, various known solvents can be appropriately selected, but at least one selected from cyclic aprotic solvents and chain aprotic solvents is preferably used.

In order to improve the safety of the battery, when it is intended to improve the flash point of the solvent, it is preferred to use a cyclic aprotic solvent as the nonaqueous solvent.

### (Cyclic aprotic solvent)

As the cyclic aprotic solvent, cyclic carbonate, cyclic carboxylic acid ester, cyclic sulfone, and cyclic ether can be used.

The cyclic aprotic solvent may be used singly, or in mixture of two or more kinds thereof.

The mixing ratio of the cyclic aprotic solvent in the nonaqueous solvent is from 10% by mass to 100% by mass, more preferably from 20% by mass to 90% by mass, and particularly preferably from 30% by mass to 80% by mass. With the ratio as such, the electroconductivity of the electrolyte solution relating to the charge and discharge characteristics of the battery can be increased.

Specific examples of the cyclic carbonate include ethylene carbonate, propylene carbonate, 1,2-butylene carbonate, 2,3-butylene carbonate, 1,2-pentylene carbonate, and 2,3-pentylene carbonate. Among these, ethylene carbonate and propylene carbonate having a high dielectric constant are preferably used. In the case of a battery using graphite as the negative electrode active material, ethylene carbonate is more preferred. These cyclic carbonates may be used in mixture of two or more kinds thereof.

Specific examples of the cyclic carboxylic acid ester include γ-butyrolactone, δ-valerolactone, or alkyl substituents such as methyl γ-butyrolactone, ethyl γ-butyrolactone, and ethyl δ-valerolactone.

The cyclic carboxylic acid ester has a low vapor pressure, a low viscosity, and a high dielectric constant, and can lower the viscosity of the electrolyte solution without lowering the flash point of the electrolyte solution and the dissociation degree of the electrolyte. Thus, since the cyclic carboxylic acid ester has the characteristics of improving the conductivity of the electrolyte solution, which is an indicator related to the discharge characteristic of the battery, without increasing the flammability of the electrolyte solution, it is preferred to use the cyclic carboxylic acid ester as the cyclic aprotic solvent, when it is intended to improve the flash point of the solvent. γ-Butyrolactone is most preferred.

It is preferred that the cyclic carboxylic acid ester is used by being mixed with another cyclic aprotic solvent. Examples thereof include a mixture of the cyclic carboxylic acid ester with a cyclic carbonate and/or a chain carbonate.

Specific examples of combinations of the cyclic carboxylic acid esters with a cyclic carbonate and/or a chain carbonate include γ-butyrolactone and ethylene carbonate; γ-butyrolactone, ethylene carbonate, and dimethyl carbonate; γ-butyrolactone, ethylene carbonate, and methyl ethyl carbonate; γ-butyrolactone, ethylene carbonate, and diethyl carbonate; γ-butyrolactone and propylene carbonate; γ-butyrolactone, propylene carbonate, and dimethyl carbonate; γ-butyrolactone, propylene carbonate, and methyl ethyl carbonate; γ-butyrolactone, propylene carbonate, and diethyl carbonate; γ-butyrolactone, ethylene carbonate, and propylene carbonate; γ-butyrolactone, ethylene carbonate, propylene carbonate, and dimethyl carbonate; γ-butyrolactone, ethylene carbonate, propylene carbonate, and methyl ethyl carbonate; γ-butyrolactone, ethylene carbonate, propylene carbonate, and diethyl carbonate; γ-butyrolactone, ethylene carbonate, dimethyl carbonate, and methyl ethyl carbonate; γ-butyrolactone, ethylene carbonate, dimethyl carbonate, and diethyl carbonate; γ-butyrolactone, ethylene carbonate, methyl ethyl carbonate, and diethyl carbonate; γ-butyrolactone, ethylene carbonate, dimethyl carbonate, and methyl ethyl carbonate, and diethyl carbonate; γ-butyrolactone, ethylene carbonate, propylene carbonate, dimethyl carbonate, and methyl ethyl carbonate; γ-butyrolactone, ethylene carbonate, propylene carbonate, dimethyl carbonate, and diethyl carbonate; γ-butyrolactone, ethylene carbonate, propylene carbonate, methyl ethyl carbonate, and diethyl carbonate; γ-butyrolactone, ethylene carbonate, propylene carbonate, dimethyl carbonate, methyl ethyl carbonate, and diethyl carbonate; γ-butyrolactone and sulfolane; γ-butyrolactone, ethylene carbonate and sulfolane; γ-butyrolactone, propylene carbonate, and sulfolane; γ-butyrolactone, ethylene carbonate, propylene carbonate, and sulfolane; and γ-butyrolactone, sulfolane, and dimethyl carbonate.

Examples of the cyclic sulfone include sulfolane, 2-methylsulfolane, 3-methylsulfolane, dimethyl sulfone, diethyl sulfone, dipropyl sulfone, methyl ethyl sulfone, and methylpropyl sulfone.

Examples of the cyclic ether include dioxolane.

### (Chain aprotic solvent)

As the chain aprotic solvent, a chain carbonate, a chain carboxylic acid ester, a chain ether, a chain phosphoric acid ester, and the like, can be used.

The mixing ratio of the chain aprotic solvent in the nonaqueous solvent is from 10% by mass to 100% by mass, more preferably from 20% by mass to 90% by mass, and particularly preferably from 30% by mass to 80% by mass.

Specific examples of the chain carbonate include dimethyl carbonate, methyl ethyl carbonate, diethyl carbonate, methyl propyl carbonate, methyl isopropyl carbonate, ethyl propyl carbonate, dipropyl carbonate, methyl butyl carbonate, ethyl butyl carbonate, dibutyl carbonate, methyl pentyl carbonate, ethyl pentyl carbonate, dipentyl carbonate, methyl heptyl carbonate, ethyl heptyl carbonate, diheptyl carbonate, methyl hexyl carbonate, ethyl hexyl carbonate, dihexyl carbonate, methyl octyl carbonate, ethyl octyl carbonate, dioctyl carbonate, and methyltrifluoroethyl carbonate. These chain carbonates may be used in mixture of two or more kinds thereof.

Specific examples of the chain carboxylic acid ester include methyl pivalate.

Specific examples of the chain ether include dimethoxyethane.

Specific examples of the chain phosphoric acid ester include trimethyl phosphate.

### (Combination of solvents)

The nonaqueous solvent contained in the nonaqueous electrolyte solution of the disclosure may be only one or two or more kinds.

Only one or more kinds of cyclic aprotic solvents, only one or more kinds of chain aprotic solvents, or a mixture of a cyclic aprotic solvent and a chain protic solvent, may be used. When it is particularly intended to improve the load characteristics and low temperature characteristics of the battery, it is preferred to use a combination of a cyclic aprotic solvent and a chain aprotic solvent as the nonaqueous solvent.

Furthermore, in view of the electrochemical stability of the electrolyte solution, it is most preferred to apply a cyclic carbonate to the cyclic aprotic solvent and a chain carbonate to the chain aprotic solvent. The conductivity of the electrolyte solution related to the charge and discharge characteristics of the battery can be increased by a combination of a cyclic carboxylic acid ester and a cyclic carbonate and/or a chain carbonate.

Specific examples of the combination of a cyclic carbonate and a chain carbonate include ethylene carbonate and dimethyl carbonate; ethylene carbonate and methyl ethyl carbonate; ethylene carbonate and diethyl carbonate; propylene carbonate and dimethyl carbonate; propylene carbonate and methyl ethyl carbonate; propylene carbonate and diethyl carbonate; ethylene carbonate, propylene carbonate, and methyl ethyl carbonate; ethylene carbonate, propylene carbonate, and diethyl carbonate; ethylene carbonate, dimethyl carbonate, and methyl ethyl carbonate; ethylene carbonate, dimethyl carbonate, and diethyl carbonate; ethylene carbonate, methyl ethyl carbonate, and diethyl carbonate; ethylene carbonate, dimethyl carbonate, methyl ethyl carbonate, and diethyl carbonate; ethylene carbonate, propylene carbonate, dimethyl carbonate, and methyl ethyl carbonate; ethylene carbonate, propylene carbonate, dimethyl carbonate, and diethyl carbonate; ethylene carbonate, propylene carbonate, methyl ethyl carbonate, and diethyl carbonate; and ethylene carbonate, propylene carbonate, dimethyl carbonate, methyl ethyl carbonate, and diethyl carbonate.

The mixing ratio of the cyclic carbonate and the chain carbonate is expressed as a mass ratio, and cyclic carbonate:chain carbonate is from 5:95 to 80:20, more preferably from 10:90 to 70:30, and particularly preferably from 15:85 to 55:45. Since the ratio as such can suppress an increase in viscosity of the electrolyte solution and increase the dissociation degree of electrolyte, the conductivity of the electrolyte solution related to the charge and discharge characteristics of a battery can be increased. The solubility of the electrolyte can be further increased. Therefore, since the electrolyte solution can have excellent electrical conductivity at normal temperature or low temperature, the load characteristics of the battery from normal temperature to a low temperature can be improved.

### (Other solvents)

Examples of the nonaqueous solvent include solvents other than those described above.

Specific examples of other solvents include amides such as dimethylformamide, chain carbamates such as methyl-N,N-dimethylcarbamate, cyclic amides such as N-methylpyrrolidone, cyclic ureas such as N,N-dimethylimidazolidinone, boron compounds such as trimethyl borate, triethyl borate, tributyl borate, trioctyl borate, and trimethylsilyl borate, and polyethylene glycol derivatives represented by the following general formula:

HO(CH₂CH₂O)ₐH

HO[CH₂CH(CH₃)O]_{b}H

CH₃O(CH₂CH₂O)_{c}H

CH₃O[CH₂CH(CH₃)O]_{d}H

CH₃O(CH₂CH₂O)ₑCH₃

CH₃O[CH₂CH(CH₃)O]_{f}CH₃

C₉H₁₉PhO(CH₂CH₂O)_{g}[CH(CH₃)O]ₕCH₃

(Ph is a phenyl group)

CH₃O[CH₂CH(CH₃)O]ᵢCO[OCH(CH₃)CH₂]ⱼOCH₃

where a to f are integers from 5 to 250, g to j are integers from 2 to 249, 5≤g+h≤250, and 5≤i+j≤250.

### (Electrolyte)

For the nonaqueous electrolyte solution of the disclosure, various known electrolytes can be used, and any one can be used as long as it is usually used as an electrolyte for a nonaqueous electrolyte solution.

Specific examples of the electrolyte include a tetraalkylammonium salt such as (C₂H₅)₄NPF₆, (C₂H₅)₄NBF₄, (C₂H₅)₄NClO₄, (C₂H₅)₄NAsF₆, (C₂H₅)₄N₂SiF₆, (C₂H₅)₄NOSO₂CₖF₍₂ₖ₊₁₎ (k = an integer from 1 to 8), and (C₂H₅)₄NPFₙ[CₖF₍₂ₖ₊₁₎]₍₆₋ₙ₎ (n = from 1 to 5, k = an integer from 1 to 8), and a lithium salt such as LiPF₆, LiBF₄, LiClO₄, LiAsF₆, Li₂SiF₆, LiOSO₂CₖF₍₂ₖ₊₁₎ (k = an integer from 1 to 8), and LiPFₙ[CₖF₍₂ₖ₊₁₎]₍₆₋ₙ₎ (n = from 1 to 5, k = an integer from 1 to 8). The lithium salt represented by the following general formula can also be used.

LiC(SO₂R⁷)(SO₂R⁸)(SO₂R⁹), LiN(SO₂OR¹⁰)(SO₂OR¹¹), LiN(SO₂R¹²)(SO₂R¹³) (where R⁷ to R¹³ may be the same as or different from each other and are a perfluoroalkyl group having from 1 to 8 carbon atoms) These electrolytes may be used singly, or in mixture of two or more kinds thereof.

Among these, a lithium salt is particularly desirable, and further, LiPF₆, LiBF₄, LiOSO₂CₖF₍₂ₖ₊₁₎ (k = an integer from 1 to 8), LiClO₄, LiAsF₆, LiNSO₂[CₖF₍₂ₖ₊₁₎]₂ (k = an integer from 1 to 8), LiPFₙ[CₖF₍₂ₖ₊₁₎]₍₆₋ₙ₎ (n = from 1 to 5, k = an integer from 1 to 8) are preferred.

The electrolyte is usually contained in the nonaqueous electrolyte solution at a concentration of from 0.1 mol/L to 3 mol/L, and preferably from 0.5 mol/L to 2 mol/L.

In the nonaqueous electrolyte solution of the disclosure, when a cyclic carboxylic acid ester such as γ-butyrolactone is used in combination as the nonaqueous solvent, it is particularly desirable to contain LiPF₆. Since LiPF₆ has a high dissociation degree, the conductivity of the electrolyte solution can be increased, and the reductive decomposition reaction of the electrolyte solution on the negative electrode can be suppressed. LiPF₆ may be used singly, or LiPF₆ and other electrolytes may be used. Any other electrolyte can be used as long as it is usually used as an electrolyte for a nonaqueous electrolyte solution, but lithium salts other than LiPF₆ are preferred among the specific examples of the lithium salt described above.

Specific examples include LiPF₆ and LiBF₄, LiPF₆ and LiN[SO₂CₖF₍₂ₖ₊₁₎]₂ (k = an integer from 1 to 8), LiPF₆, LiBF₄, and LiN[SO₂CₖF₍₂ₖ₊₁₎] (k = an integer from 1 to 8).

The ratio of LiPF₆ in the lithium salt is preferably from 1% by mass to 100% by mass, more preferably from 10% by mass to 100% by mass, and still more preferably from 50% by mass to 100% by mass. Such an electrolyte is contained in the nonaqueous electrolyte solution at a concentration of from 0.1 mol/L to 3 mol/L, preferably from 0.5 mol/L to 2 mol/L.

The nonaqueous electrolyte of the disclosure is not only suitable as the nonaqueous electrolyte solution for a lithium secondary battery, but also usable as a nonaqueous electrolyte solution for a primary battery, a nonaqueous electrolyte solution for an electrochemical capacitor, and an electrolyte solution for an electric double layer capacitor and an aluminum electrolytic capacitor.

### <Positive Electrode>

The lithium secondary battery of the disclosure includes a positive electrode including a positive electrode active material.

The positive electrode active material contains a lithium transition metal compound X, which is at least one selected from the group consisting of a lithium transition metal composite oxide and a lithium transition metal phosphate, a ratio of Mn in the transition metal elements contained in the lithium transition metal compound X being from 0 mol% to less than 50 mol%.

In the lithium transition metal compound X, the ratio of Mn in the transition metal elements contained being from 0 mol% to less than 50 mol%. Thus, the effect of the nonaqueous electrolyte solution and the lithium secondary battery of the disclosure is exhibited.

In the lithium transition metal compound X, the fact that the ratio of Mn in the transition metal elements contained being from 0 mol% to less than 50 mol% means that the main constituent of transition metal elements in the lithium transition metal compound X is not Mn.

From the viewpoint that the effects of the nonaqueous electrolyte solution and the lithium secondary battery of the disclosure are more effectively exhibited, the ratio of Mn in the transition metal elements contained is preferably 40 mol% or less, and more preferably 35 mol% or less, in the lithium transition metal compound X.

The ratio of Mn as described above may be 0 mol%.

However, from the viewpoint of further decreasing the battery resistance after storage measured under low temperature conditions, the ratio of Mn is preferably more than 0 mol%, more preferably 5 mol% or more, and still more preferably 10 mol% or more.

It is preferred that the lithium transition metal compound X contains at least one selected from the group consisting of Co, Ni, and Fe. In this case, the lithium transition metal compound X may contain transition metals other than Co, Ni, and Fe.

It is more preferred that in the lithium transition metal compound X, the total ratio of Co, Ni, and Fe relative to the transition metal elements contained in the lithium transition metal compound X is 50 mol% or more.

The fact that the total ratio of Co, Ni, and Fe relative to the transition metal elements contained in the lithium transition metal compound X being 50 mol% or more means that the main constituent of transition metal elements contained in the lithium transition metal compound X is at least one selected from the group consisting of Co, Ni, and Fe.

Here, needless to say, the total ratio of Co, Ni, and Fe refers to a ratio of one in the transition metal elements contained when the lithium transition metal compound X contains only one of Co, Ni, and Fe, and refers to a ratio of two in the transition metal elements contained when the lithium transition metal compound X contains only two of Co, Ni, and Fe.

In the lithium transition metal compound X, the total ratio of Co, Ni, and Fe in the transition metal elements contained is more preferably 60 mol% or more, and still more preferably 65 mol% or more.

In the lithium transition metal compound X, the upper limit of the total ratio of Co, Ni, and Fe in the transition metal elements contained is not particularly limited. The total ratio of Co, Ni, and Fe in the transition metal elements contained may be 100 mol%, may be less than 100 mol%, may be 95 mol% or less, or may be 90 mol% or less.

The lithium transition metal compound X is at least one selected from the group consisting of a lithium transition metal composite oxide and a lithium transition metal phosphate.

It is preferred that the lithium transition metal composite oxide contains at least one of a compound represented by the following Formula (P1) or a compound represented by the following Formula (P2). In this case, each of the compound represented by Formula (P1) and the compound represented by Formula (P2) which can be included in the lithium transition metal composite oxide may be only one or two or more kinds:

LiM¹_{X}M²_{(1-X)}O₂ (P1)

In Formula (P1), X represents from 0 to 1.00, each of M¹ and M² independently represents Co, Ni, or Fe, and
each of a part of M¹ and a part of M² may be independently replaced by at least one selected from the group consisting of Al, Mg, and Ti.

Examples of the compound represented by Formula (P1) include LiCoO₂, LiNiO₂, and LiFeO₂.

Among these, LiCoO₂ or LiNiO₂ is preferred, and LiCoO₂ is particularly preferred.

LiNiₓMn_{y}Co_{z}O₂ (P2)

In Formula (P2), x represents from 0 to 1.00, y represents from 0 to less than 0.50, z represents from 0 to 1.00, and a sum of x, y, and z is from 0.99 to 1.00.

y in Formula (P2) is preferably 0.40 or less, and more preferably 0.35 or less.
y in Formula (P2) may be 0.

From the viewpoint of further decreasing battery resistance after storage measured under low temperature conditions, y in Formula (P2) is preferably more than 0, more preferably 0.05 or more, and still more preferably 0.10 or more.

Examples of the compound represented by Formula (P2) include

LiNi_{0.33}Mn_{0.33}Co_{0.33}O₂,

and

LiNi_{0.5}Mn_{0.3}Co_{0.2}O₂.

When the lithium transition metal compound X satisfies the condition that the ratio of Mn in the transition metal elements is from 0 mol% to less than 50 mol%, the lithium transition metal composite oxide may contain Li_{1+α}Me_{1-α}O₂ (Me is a transition metal element including Mn, Ni, and Co, 1.0≤(1+α)/(1-α)≤1.6) and the like, instead of at least one of the compound represented by Formula (P1) or the compound represented by Formula (P2), or in addition to at least one of the compound represented by Formula (P1) or the compound represented by Formula (P2).

It is preferred that the lithium transition metal phosphate contains a compound represented by the following Formula (P3). In this case, the compound represented by Formula (P3) contained in the lithium transition metal composite oxide may be only one or two or more kinds.

LiM³PO₄ (P3)

In Formula (P3), M³ represents Co, Ni, or Fe, and a part of M³ may be replaced by at least one selected from the group consisting of Al, Mg, and Ti.

Examples of the compound represented by Formula (P3) include LiCoPO₄, LiNiPO₄, and LiFePO₄.

Among these, LiFePO₄ is particularly preferred.

The lithium transition metal compound X contains, preferably, at least one selected from the group consisting of LiCoO₂, LiNiO₂, LiFeO₂, the compound represented by Formula (P2), LiCoPO₄, LiNiPO₄, and LiFePO₄, more preferably at least one selected from the group consisting of LiCoO₂ and the compound represented by Formula (P2), and still more preferably, the compound represented by Formula (P2).

In these preferred embodiments, as the compound represented by Formula (P2), a compound in which y in Formula (P2) is more than 0 and less than 0.50 is preferred, from the viewpoint of further decreasing battery resistance after storage measured under low temperature conditions.

The positive electrode active material may contain a material other than the lithium transition metal compound X.

Examples of the material other than lithium transition metal compound X include conductive polymer materials such as polyaniline, polythiophene, polypyrrole, polyacetylene, polyacene, dimercaptothiadiazole, and polyaniline complex; carbon materials such as carbon black, amorphous whiskers, and graphite.

The positive electrode may contain a positive electrode current collector.

There is no particular limitation on the material of a positive electrode current collector, and a well-known material can be optionally used.

Specific examples of the positive electrode current collector include metal materials such as aluminum, an aluminum alloy, stainless steel, nickel, titanium, and tantalum; and carbon materials such as carbon cloth and carbon paper.

### <Negative Electrode>

The lithium secondary battery of the disclosure includes a negative electrode.

The negative electrode may contain a negative electrode active material and a negative electrode current collector.

In the negative electrode active material in the negative electrode, at least one selected from the group consisting of metal lithium, lithium-containing alloys, metals or alloys which can be alloyed with lithium, oxides which can be doped/undoped with lithium ions, transition metal nitrides which can be doped/undoped with lithium ions, and carbon materials which can be doped/undoped with lithium ions (which may be used singly, or in mixture of two or more kinds thereof), can be used.

Examples of a metal or alloy which can be alloyed with lithium (or lithium ions) include silicon, silicon alloys, tin, and tin alloys. Further, lithium titanate may be used.

Among these, carbon materials which can be doped/undoped with lithium ions are preferred. Examples of the carbon material include carbon black, activated carbon, graphite material (artificial graphite or natural graphite), and amorphous carbon materials. The shape of the carbon material may be any of a fibrous shape, a spherical shape, a potato shape, and a flake shape.

Specific examples of the amorphous carbon material include hard carbon, coke, mesocarbon microbeads (MCMB) baked to 1500°C or less, and mesophase pitch carbon fiber (MCF).

Examples of the graphite material include natural graphite and artificial graphite. As the artificial graphite, graphitized MCMB, graphitized MCF, and the like are used. As the graphite material, a graphite material containing boron can be used. As the graphite material, those coated with a metal such as gold, platinum, silver, copper and tin, those coated with amorphous carbon, and those obtained by mixing amorphous carbon and graphite, can be used.

These carbon materials may be used singly, or in mixture of two or more kinds thereof.

The carbon material is particularly preferably a carbon material having a (002) plane spacing d (002) of 0.340 nm or less as measured by X-ray analysis. The carbon material is also preferably graphite having a true density of 1.70 g/cm³ or more or a highly crystalline carbon material having properties close thereto. When the carbon material as described above is used, energy density of the battery can be further increased.

There is no particular limitation on the material of the negative electrode current collector in a negative electrode, and a well-known material can be optionally used.

Specific examples of the negative electrode current collector include metal materials such as copper, nickel, stainless steel, and nickel-plated steel. Among these, copper is particularly preferred, from the viewpoint of ease of processing.

### <Separator>

It is preferred that the lithium secondary battery of the disclosure includes a separator between the negative electrode and the positive electrode.

The separator is a film which electrically insulates the positive electrode and the negative electrode and permeates lithium ions, and examples thereof include a porous film and a polymer electrolyte.

As the porous film, a microporous polymer film is preferably used, and examples of the material include polyolefin, polyimide, polyvinylidene fluoride, and polyester.

In particular, porous polyolefin is preferred, and specific examples thereof include a porous polyethylene film, a porous polypropylene film, or a multilayer film of a porous polyethylene film and a polypropylene film. On the porous polyolefin film, other resins having excellent thermal stability may be coated.

Examples of the polymer electrolyte include a polymer in which a lithium salt is dissolved and a polymer swollen with an electrolyte solution.

The nonaqueous electrolyte solution of the disclosure may be used for the purpose of obtaining a polymer electrolyte by swelling a polymer.

### <Battery Configuration>

The lithium secondary battery of the disclosure can take various known shapes, and can be formed into a cylindrical type, a coin type, a square type, a laminate type, a film type, or any other shape. However, the basic structure of the battery is the same regardless of the shape, and the design can be changed according to the purpose.

Examples of the lithium secondary battery of the disclosure include a laminate type battery.

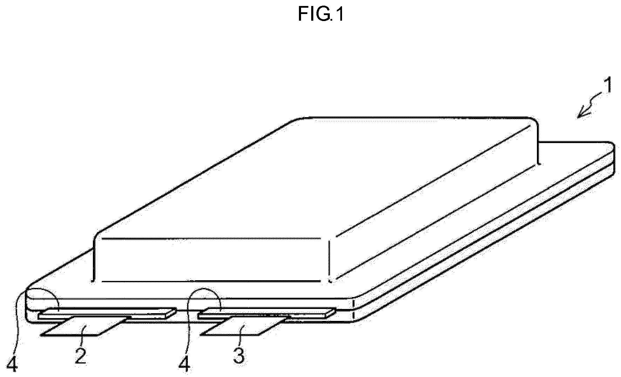

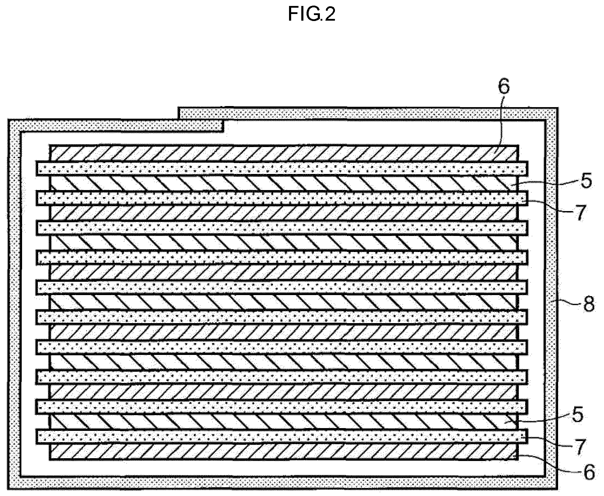

Fig. 1 is a schematic perspective view showing an example of a laminate type battery which is an example of the lithium secondary battery of the disclosure, and Fig. 2 is a schematic cross-sectional view of the stacked electrode body accommodated in the laminate type battery shown in Fig. 1 in the thickness direction.

The laminate type battery shown in Fig. 1 includes a nonaqueous electrolyte solution (not shown in Fig. 1) and a stacked electrode body (not shown in Fig. 1) inside, and also the periphery is sealed, so that the laminate outer package 1 with the inside being sealed is provided. As the laminate exterior body 1, for example, an aluminum laminate outer package is used.

As shown in Fig. 2, the stacked electrode body accommodated in the laminate outer package 1 includes a laminate in which positive electrode plates 5 and negative electrode plates 6 are alternately laminated with separators 7 interposed therebetween, and a separator 8 surrounding the periphery of the laminate. The positive electrode plate 5, the negative electrode plate 6, the separator 7, and the separator 8 are impregnated with the nonaqueous electrolyte solution of the disclosure.

The plurality of positive electrode plates 5 in the stacked electrode body are all electrically connected to the positive electrode terminal 2 via the positive electrode tab (not shown), and a part of the positive electrode terminal 2 protrudes outward from the peripheral end portion of the laminate outer package 1 (Fig. 1). A portion where the positive electrode terminal 2 protrudes in the peripheral end portion of the laminate outer package 1 is sealed with an insulating seal 4.

Similarly, the plurality of negative electrode plates 6 in the stacked electrode body are all electrically connected to the negative electrode terminal 3 via the negative electrode tab (not shown), and a part of the negative electrode terminal 3 protrudes outward from the peripheral end portion of the laminate outer package 1 (Fig. 1). A portion where the negative electrode terminal 3 protrudes in the peripheral end portion of the laminate outer package 1 is sealed with an insulating seal 4.

In the laminate type battery according to the above example, the number of the positive electrode plates 5 is 5, the number of the negative electrode plates 6 is 6, and the positive electrode plates 5 and the negative electrode plates 6 are laminated with a separator 7 interposed therebetween, so that the outermost layers of both sides are the negative electrode plates 6. However, it is needless to say that in the laminate type battery, the number of positive electrode plates, the number of negative electrode plates, and the arrangement thereof are not limited to this example, and various changes may be made.

Another examples of the lithium secondary battery of the disclosure include a coin type battery.

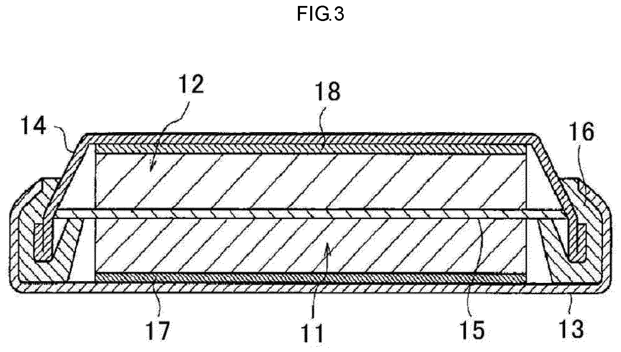

Fig. 3 is a schematic perspective view showing an example of a coin type battery which is another example of the lithium secondary battery of the disclosure.

In the coin type battery shown in Fig. 3, a disc-shaped negative electrode 12, a separator 15 to which the nonaqueous electrolyte solution is injected, a disc-shaped positive electrode 11, and if necessary, spacer plates 17 and 18 made of for example, stainless steel or aluminum are accommodated between a positive electrode can 13 (hereinafter also referred to as "a battery can") and a sealing plate 14 (hereinafter also referred to as "a battery can lid"), in a state of being laminated in this order. The positive electrode can 13 and the sealing plate 14 are caulked and sealed via a gasket 16.

In this example, the nonaqueous electrolyte solution of the disclosure is used as the nonaqueous electrolyte solution injected to the separator 15.

The lithium secondary battery of the disclosure may be a lithium secondary battery obtained by charging and discharging a lithium secondary battery (lithium secondary battery before charging and discharging) including a negative electrode, a positive electrode, and the nonaqueous electrolyte solution of the disclosure.

That is, a lithium secondary battery of the disclosure may be a lithium secondary battery (charged and discharged lithium secondary battery) produced by first, producing a lithium secondary battery before charging and discharging including a negative electrode, a positive electrode, and the nonaqueous electrolyte solution of the disclosure, and then, charging and discharging the lithium secondary battery before charging and discharging one or more times.

The use of the lithium secondary battery of the disclosure is not particularly limited, and can be used for various known uses. For example, the lithium secondary battery can be widely used, from small portable devices such as notebook PCs, mobile PCs, mobile phones, headphone stereos, video movies, LCD TVs, hand-held cleaners, electronic notebooks, calculators, radios, backup power applications, motors, automobiles, electric cars, motorcycles, electric bikes, bicycles, electric motors bicycles, lighting fixtures, game machines, watches, electric tools, and cameras to large devices.

### EXAMPLES

Hereinafter, examples of the disclosure will be described below, but the disclosure is not limited to the following examples.

In the following examples, an "addition amount" represents the content in the finally obtained nonaqueous electrolyte solution (that is, the amount with respect to the total amount of the finally obtained nonaqueous electrolyte solution).
"wt%" means % by mass.

### [Example 1]

A coin type lithium secondary battery (hereinafter also referred to as a "coin type battery") having the configuration shown in Fig. 3 was produced by the following procedure.

### <Production of Negative Electrode>

A paste-like negative electrode mixture slurry was prepared by kneading 97 parts by mass of natural graphite-based graphite, carboxymethyl cellulose (1 part by mass), and SBR latex (2 parts by mass) with an aqueous solvent.

Next, the negative electrode mixture slurry was applied to a negative electrode current collector made of a strip-shaped copper foil having a thickness of 18 µm, dried, and then compressed by a roll press to obtain a sheet-like negative electrode including a negative electrode current collector and a negative electrode active material layer. The coating density of the negative electrode active material layer in this case was 10 mg/cm², and the packing density thereof was 1.5 g/ml.

### <Production of Positive Electrode>

LiCoO₂ (90 parts by mass) as the lithium transition metal compound X in which the main constituent of transition metal elements is not Mn, acetylene black (5 parts by mass), and polyvinylidene fluoride (5 parts by mass), were kneaded using N-methylpyrrolidinone as a solvent to prepare a paste-like positive electrode mixture slurry.

Next, the positive electrode mixture slurry was applied to a positive electrode current collector of a strip-shaped aluminum foil having a thickness of 20 µm, dried, and then compressed by a roll press to obtain a sheet-like positive electrode including a positive electrode current collector and a positive electrode active material. The coating density of the positive electrode active material layer in this case was 30 mg/cm², and the packing density thereof was 2.5 g/ml.

### <Preparation of Nonaqueous Electrolyte Solution>

As a nonaqueous solvent, ethylene carbonate (EC), dimethyl carbonate (DMC), and methyl ethyl carbonate (EMC) were mixed at a ratio of 34:33:33 (mass ratio), respectively, to obtain a mixed solvent.

In the obtained mixed solvent, LiPF₆ as an electrolyte was dissolved such that the electrolyte concentration in the finally prepared nonaqueous electrolyte solution was 1 mol/l.

To the obtained solution, lithium tetraborate which is the boron compound represented by Formula (1) (that is, the compound of Formula (1), where n is 2 and both M⁺'s are Li⁺ ions) was added as an additive, such that the content with respect to the total mass of the finally prepared nonaqueous electrolyte solution was 0.05% by mass (that is, added at an addition amount of 0.05% by mass), thereby obtaining a nonaqueous electrolyte solution.

### <Production of Coin Type Battery>

The negative electrode described above was punched into a disk shape having a diameter of 14 mm and the positive electrode was punched into a disk shape having a diameter of 13 mm, thereby obtaining a coin-shaped negative electrode and a coin-shaped positive electrode, respectively. A microporous polyethylene film having a thickness of 20 µm was punched into a disk shape having a diameter of 17 mm to obtain a separator.

The obtained coin-shaped negative electrode, separator, and coin-shaped positive electrode were laminated in a stainless steel battery can (2032 size) in this order, and then 20 µl of the nonaqueous electrolyte solution was injected into the battery can and impregnated into the separator, the positive electrode, and the negative electrode.

Next, an aluminum plate (thickness of 1.2 mm, diameter of 16 mm) and a spring were placed on the positive electrode, and the battery was sealed by caulking the battery can lid, via a polypropylene gasket.

Thus, a coin type battery (that is, a coin type lithium secondary battery) having the configuration shown in Fig. 3 having a diameter of 20 mm and a height of 3.2 mm was obtained.

### <Evaluation>

The following evaluation was performed on the obtained coin type battery.

### (Initial Capacity)

At 25°C, the coin type battery was charged to a constant voltage of 4.2 V at a constant current of 0.4 mA, and then discharged to 2.85V at a constant current of 0.8 mA. A discharge capacity during the discharge was measured and used as an initial capacity.

The initial capacity of the coin type battery of Comparative Example 1 described later was similarly measured.

In Table 1, the initial capacity of Example 1 is represented as a relative value to the case in which the initial capacity of Comparative Example 1 is 100.

### (Battery Resistance Before Storage (25°C))

The coin type battery obtained above was charged and discharged three times at a constant voltage of 4.2 V, and then charged to a constant voltage of 3.9 V. The coin type battery after charging was kept at 25°C in a thermostatic bath, discharged at a constant current of 0.2 mA at 25°C, and a potential drop in the coin type battery was measured for 10 seconds after the start of discharge, thereby measuring a DC resistance [Ω] at 25°C of the coin type battery. The obtained value was defined as battery resistance before storage (25°C).

For the coin type battery of Comparative Example 1 described later also, the battery resistance before storage (25°C) was measured in the same manner.

Table 1 shows the battery resistance before storage (25°C) of Example 1 as a relative value to the case in which the battery resistance before storage (25°C) of Comparative Example 1 is 100.

### (Battery resistance after storage (25°C))

A coin type battery of which the battery resistance before storage (25°C) was measured was charged at a constant voltage of 4.2 V, and the charged coin type battery was stored in a thermostatic bath at 80°C for 2 days.

The coin type battery after storage for 2 days was set to a constant voltage of 3.9 V, and the DC resistance [Ω] of the coin type battery at 25°C was measured in the same manner as in the battery resistance before storage (25°C). The obtained value was defined as the battery resistance after storage (25°C).

For the coin type battery of Comparative Example 1 described later also, the battery resistance after storage (25°C) was measured in the same manner.

Table 1 shows the battery resistance after storage (25°C) of Example 1 as a relative value to the case in which the battery resistance after storage (25°C) of Comparative Example 1 is 100.

### (Battery resistance before storage (-20°C))

The coin type battery obtained above was charged and discharged three times at a constant voltage of 4.2 V, and then charged to a constant voltage of 3.9 V. The coin type battery after charging was kept at -20°C in a thermostatic bath, discharged at a constant current of 0.2 mA at -20°C, and a potential drop in the coin type battery was measured for 10 seconds after the start of discharge, thereby measuring a DC resistance [Ω] at -20°C of the coin type battery. The obtained value was defined as battery resistance before storage (-20°C).

For the coin type battery of Comparative Example 1 described later also, the battery resistance before storage (-20°C) was measured in the same manner.

Table 1 shows the battery resistance before storage (-20°C) of Example 1 as a relative value to the case in which the battery resistance before storage (-20°C) of Comparative Example 1 is 100.

### (Battery resistance after storage (-20°C))

A coin type battery of which the battery resistance before storage (-20°C) was measured was charged at a constant voltage of 4.2 V, and the charged coin type battery was stored in a thermostatic bath at 80°C for 2 days.

The coin type battery after storage for 2 days was set to a constant voltage of 3.9 V, and the DC resistance [Ω] of the coin type battery at -20°C was measured in the same manner as in the battery resistance before storage (-20°C). The obtained value was defined as the battery resistance after storage (-20°C).

For the coin type battery of Comparative Example 1 described later also, the battery resistance after storage (-20°C) was measured in the same manner.

Table 1 shows the battery resistance after storage (-20°C) of Example 1 as a relative value to the case in which the battery resistance after storage (-20°C) of Comparative Example 1 is 100.

### [Examples 2 to 4]

The same operation was performed in the same manner as in Example 1, except that in the preparation of the nonaqueous electrolyte solution, the addition amount of the boron compound represented by Formula (1) was changed as shown in Table 1.

The results are shown in Table 1.

### [Comparative Example 1]

The same operation was performed in the same manner as in Example 1, except that in the preparation of the nonaqueous electrolyte solution, the boron compound represented by Formula (1) was not used.

The results are shown in Table 1.

**[Table 1]**

| | Positive electrode active material | Additive in nonaqueous electrolyte solution | Initial capacity (relative value) | Battery resistance (25°C) | | Battery resistance (-20°C) | |
|---|---|---|---|---|---|---|---|
| | | Boron compound represented by Formula (1) (wt%) | | Before storage (relative value) | After storage (relative value) | Before storage (relative value) | After storage (relative value) |
| Comparative Example 1 | LiCoO₂ | 0 | 100 | 100 | 100 | 100 | 100 |
| Example 1 | LiCoO₂ | 0.05 | 100 | 94 | 98 | 81 | 95 |
| Example 2 | LiCoO₂ | 0.1 | 100 | 83 | 89 | 73 | 90 |
| Example 3 | LiCoO₂ | 0.3 | 100 | 87 | 83 | 64 | 74 |
| Example 4 | LiCoO₂ | 0.5 | 100 | 88 | 88 | 70 | 76 |

As shown in Table 1, it was confirmed that Examples 1 to 4 which are lithium secondary batteries including a positive electrode active material containing the lithium transition metal compound X (LiCoO₂) in which the main constituent of transition metal elements is not Mn and a nonaqueous electrolyte solution containing the boron compound represented by Formula (1) had low battery resistance before storage (25°C), low battery resistance after storage (25°C), low battery resistance before storage (-20°C), and low battery resistance after storage (-20°C), as compared with Comparative Example 1.

### [Comparative Examples 2 and 3]

In each of Comparative Examples 2 and 3, a coin type battery was produced in the same manner as in Comparative Examples 1 and 4, except that the positive electrode was changed to a positive electrode produced by the following method.

### <Production of Positive Electrode>

LiMnO₂ (90 parts by mass) which is a transition metal compound in which the main constituent of transition metal elements is Mn, acetylene black (5 parts by mass), and polyvinylidene fluoride (5 parts by mass), were kneaded using N-methylpyrrolidinone as a solvent to prepare a paste-like positive electrode mixture slurry.

Next, the positive electrode mixture slurry was applied to a positive electrode current collector of a strip-shaped aluminum foil having a thickness of 20 µm, dried, and then compressed by a roll press to obtain a sheet-like positive electrode including a positive electrode current collector and a positive electrode active material. The coating density of the positive electrode active material layer in this case was 30 mg/cm², and the packing density thereof was 2.5 g/ml.

The evaluation was performed on the obtained coin type battery in the same manner as in Example 1.

Table 2 shows the battery resistance after storage (25°C) and the battery resistance after storage (-20°C) in Comparative Examples 2 and 3.

In Table 2, the battery resistance after storage (25°C) and the battery resistance after storage (-20°C) in Comparative Example 3 are relative values, respectively, to the case in which the battery resistance after storage (25°C) and battery resistance after storage (-20°C) in Comparative Example 2 are 100.

**[Table 2]**

| | Positive electrode active material | Additive in nonaqueous electrolyte solution | Initial capacity (relative value) | Battery resistance (25°C) | Battery resistance (-20°C) |
|---|---|---|---|---|---|
| | | Boron compound represented by Formula (1) (wt%) | | After storage (relative value) | After storage (relative value) |
| Comparative Example 2 | LiMnO₂ | 0 | 100 | 100 | 100 |
| Comparative Example 3 | LiMnO₂ | 0.5 | 100 | 114 | 151 |

As shown in Table 2, in the lithium secondary batteries including a positive electrode active material containing the lithium transition metal compound (LiMnO₂) in which the main constituent of transition metal elements is Mn, in the case in which the nonaqueous electrolyte solution contains the boron compound represented by Formula (1) (Comparative Example 3), battery resistance after storage (25°C) and battery resistance after storage (-20°C) (in particular, the battery resistance after storage (-20°C)) were increased, as compared with the case in which the nonaqueous electrolyte solution does not contain the boron compound represented by Formula (1) (Comparative Example 2).

Specifically, in Comparative Example 3, the battery resistance after storage (25°C) was 114 as a relative value to the value of Comparative Example 2 in which the nonaqueous electrolyte solution does not contain the boron compound represented by Formula (1), and the battery resistance after storage (-20°C) was 151 as the relative value.

Meanwhile, as shown in Table 1 as described above, the lithium secondary batteries which include a positive electrode containing a positive electrode active material containing the lithium transition metal compound X (LiCoO₂) in which the main constituent of transition metal elements is not Mn had decreased battery resistance after storage (25°C) and battery resistance after storage (-20°C), as compared with the case in which the nonaqueous electrolyte solution contains the boron compound represented by Formula (1) (Example 4) and the case in which the nonaqueous electrolyte solution does not contain the boron compound represented by Formula (1) (Comparative Example 1).

Specifically, in Example 4, the battery resistance after storage (25°C) was 88 as a relative value to the value of Comparative Example 1 in which the nonaqueous electrolyte solution does not contain the boron compound represented by Formula (1), and the battery resistance after storage (-20°C) was 76 as the relative value.

As described above, it was confirmed that a lithium secondary battery including a combination of a positive electrode active material containing a lithium transition metal compound X (LiCoO₂) in which the main constituent of transition metal elements is not Mn and a nonaqueous electrolyte solution containing the boron compound represented by Formula (1) (Examples 1 to 4) had decreased battery resistance after storage (particularly, the battery resistance after storage measured under low temperature conditions), as compared with the lithium secondary battery including a combination of a positive electrode active material containing a transition metal compound (LiMnO₂) in which the main constituent of transition metal elements is Mn and a nonaqueous electrolyte solution containing the boron compound represented by Formula (1) (Comparative Example 3).

### [Example 5 and Comparative Example 4]

The same operations were performed in the same manner as in Example 2 and Comparative Example 1, respectively, except that LiCoO₂ (90 parts by mass) was changed to LiNi_{0.5}Mn_{0.3}Co_{0.2}O₂ (90 parts by mass).

The results are shown in Table 3.

In Table 3, battery resistance before storage (25°C), battery resistance after storage (25°C), battery resistance before storage (-20°C), and battery resistance after storage (-20°C) in Example 5 were relative values to the case in which battery resistance before storage (25°C), battery resistance after storage (25°C), battery resistance before storage (-20°C), and battery resistance after storage (-20°C) in Comparative Example 4 are 100.

**[Table 3]**

| | Positive electrode active material | Additive in nonaqueous electrolyte solution | Initial capacity (relative value) | Battery resistance (25°C) | | Battery resistance (-20°C) | |
|---|---|---|---|---|---|---|---|
| | | Boron compound represented by Formula (1) (wt%) | | Before storage (relative value) | After storage (relative value) | Before storage (relative value) | After storage (relative value) |
| Comparative Example 4 | LiNi_{0.5}Mn_{0.3}Co_{0.2}O₂ | 0 | 100 | 100 | 100 | 100 | 100 |
| Example 5 | LiNi_{0.5}Mn_{0.3}Co_{0.2}O₂ | 0.1 | 100 | 84 | 95 | 69 | 84 |

As shown in Table 3, it was confirmed that even when the kind of positive electrode active material was changed from LiCoO₂ to LiNi_{0.5}Mn_{0.3}Co_{0.2}O₂, the same tendency as in each of Example 2 and Comparative Example 1 (see Table 1) resulted.

That is, it was confirmed that Example 5 which is a lithium secondary battery including a positive electrode active material containing the lithium transition metal compound X(LiNi_{0.5}Mn_{0.3}Co_{0.2}O₂) in which the main constituent of transition metal elements is not Mn and a nonaqueous electrolyte solution containing the boron compound represented by Formula (1) had low battery resistance before storage (25°C), low battery resistance after storage (25°C), low battery resistance before storage (-20°C), and low battery resistance after storage (-20°C), as compared with Comparative Example 4 in which the nonaqueous electrolyte solution does not contain the boron compound represented by Formula (1).

Considering the results of Comparative Examples 2 and 3 in Table 2, it was confirmed that a lithium secondary battery including a combination of a positive electrode active material containing a lithium transition metal compound X (LiNi_{0.5}Mn_{0.3}Co_{0.2}O₂) in which the main constituent of transition metal elements is not Mn and a nonaqueous electrolyte solution containing the boron compound represented by Formula (1) (Example 5) had decreased battery resistance after storage (particularly, the battery resistance after storage measured under low temperature conditions), as compared with the lithium secondary battery including a combination of a positive electrode active material containing a transition metal compound (LiMnO₂) in which the main constituent of transition metal elements is Mn and a nonaqueous solution containing the boron compound represented by Formula (1)

### (Comparative Example 3).

In Example 5 using LiNi_{0.5}Mn_{0.3}Co_{0.2}O₂, the battery resistance after storage (25°C) was 95, and the battery resistance after storage (-20°C) was 84 (see Table 3).

In contrast, in Example 2 using LiCoO₂, the battery resistance after storage (25°C) was 89, and the battery resistance after storage (-20°C) was 90 (see Table 1).

From the results as such, it can be seen that in the case in which the ratio of Mn in the transition metal elements contained in the lithium transition metal compound X is more than 0 mol% but less than 50 mol% (for example, Example 5), the effect of decreasing the battery resistance after storage measured under low temperature conditions is excellent, as compared with the case in which the ratio of Mn in the transition metal elements contained in the lithium transition metal compound X is 0% (for example, Example 2),

The disclosure of Japanese Patent Application No. 2017-161286 filed on August 24, 2017 is incorporated herein by reference in its entirety.

All documents, patent applications, and technical standards mentioned herein are incorporated herein by reference to the same extent as if each of the individual documents, patent applications, and technical standards was specifically and individually stated to be incorporated by reference.

## Claims

1. A lithium secondary battery, comprising:
a positive electrode containing a positive electrode active material that contains a lithium transition metal compound X, which is at least one selected from the group consisting of a lithium transition metal composite oxide and a lithium transition metal phosphate, a ratio of Mn in transition metal elements contained in the lithium transition metal compound X being from 0 mol% to less than 50 mol%;
a negative electrode; and
a nonaqueous electrolyte solution containing a boron compound represented by the following Formula (1): 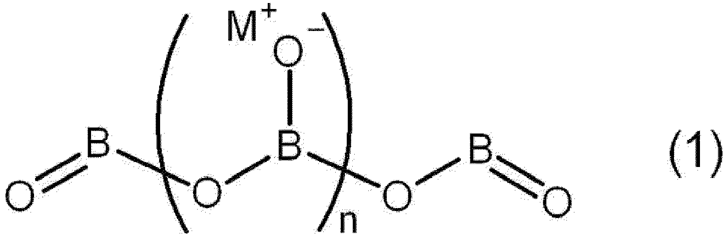
wherein, in Formula (1), n represents an integer from 1 to 5, M⁺ represents an Li⁺ ion or an H⁺ ion, and when n is an integer from 2 to 5, more than one M⁺ may be the same as or different from each other.

2. The lithium secondary battery according to claim 1, wherein the M⁺ in Formula (1) is an Li⁺ ion.

3. The lithium secondary battery according to claim 1 or 2, wherein a content of the boron compound represented by Formula (1) with respect to a total amount of the nonaqueous electrolyte solution is from 0.001% by mass to 10% by mass.

4. The lithium secondary battery according to any one of claims 1 to 3, wherein the lithium transition metal compound X contains at least one selected from the group consisting of Co, Ni, and Fe, and a total ratio of Co, Ni, and Fe relative to the transition metal elements contained in the lithium transition metal compound X is 50 mol% or more.

5. The lithium secondary battery according to any one of claims 1 to 4, wherein the lithium transition metal composite oxide includes at least one of a compound represented by the following Formula (P1) or a compound represented by the following Formula (P2), and
the lithium transition metal phosphate includes a compound represented by the following Formula (P3):
LiM¹_{X}M²_{(1-X)}O₂ (P1)
LiNiₓMn_{y}Co_{z}O₂ (P2)
LiM³PO₄ (P3)
wherein, in Formula (P1), X represents from 0 to 1.00, each of M¹ and M² independently represents Co, Ni, or Fe, and each of a part of M¹ and a part of M² may be independently replaced by at least one selected from the group consisting of Al, Mg, and Ti,
in Formula (P2), x represents from 0 to 1.00, y represents from 0 to less than 0.50, z represents from 0 to 1.00, and a sum of x, y, and z is from 0.99 to 1.00, and
in Formula (P3), M³ represents Co, Ni, or Fe, and a part of M³ may be replaced by at least one selected from the group consisting of Al, Mg, and Ti.

6. The lithium secondary battery according to any one of claims 1 to 5, wherein the lithium transition metal compound X includes at least one selected from the group consisting of LiCoO₂, LiNiO₂, LiFeO₂, a compound represented by the following Formula (P2),
LiCoPO₄, LiNiPO₄, and LiFePO₄:
LiNiₓMn_{y}Co_{z}O₂ (P2)
wherein, in Formula (P2), x represents from 0 to 1.00, y represents from 0 to less than 0.50, z represents from 0 to 1.00, and a sum of x, y, and z is from 0.99 to 1.00.

7. The lithium secondary battery according to any one of claims 1 to 6, wherein a ratio of Mn in the lithium transition metal compound X is more than 0 mol% and less than 50 mol%.

8. The lithium secondary battery according to claim 6, wherein the lithium transition metal compound X includes the compound represented by Formula (P2), and y in Formula (P2) is more than 0 and less than 0.50.

9. A lithium secondary battery obtained by charging and discharging the lithium secondary battery according to any one of claims 1 to 8.

10. A nonaqueous electrolyte solution, comprising:
a boron compound represented by the following Formula (1), the nonaqueous electrolyte solution being used in a lithium secondary battery including a positive electrode active material that contains a lithium transition metal compound X, which is at least one selected from the group consisting of lithium transition metal composite oxides and lithium transition metal phosphates, a ratio of Mn in transition metal elements contained in the lithium transition metal compound X being from 0 mol% to less than 50 mol%: 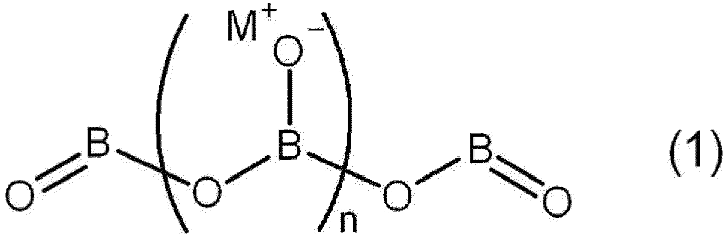
wherein, in Formula (1), n represents an integer from 1 to 5, M⁺ represents an Li⁺ ion or an H⁺ ion, and when n is an integer from 2 to 5, more than one M⁺ may be the same as or different from each other.

11. The nonaqueous electrolyte solution according to claim 10, wherein the lithium transition metal compound X includes at least one selected from the group consisting of LiCoO₂, LiNiO₂, LiFeO₂, a compound represented by the following Formula (P2), LiCoPO₄, LiNiPO₄, and LiFePO₄:
LiNiₓMn_{y}Co_{z}O₂ (P2)
wherein, in Formula (P2), x represents from 0 to 1.00, y represents from 0 to less than 0.50, z represents from 0 to 1.00, and a sum of x, y, and z is from 0.99 to 1.00.

12. The nonaqueous electrolyte solution according to claim 10 or 11, wherein the ratio of Mn in the lithium transition metal compound X is more than 0 mol% and less than 50 mol%.

13. The nonaqueous electrolyte solution according to claim 11, wherein the lithium transition metal compound X includes the compound represented by Formula (P2) and y in Formula (P2) is more than 0 and less than 0.50.
